# EUROPEAN PATENT APPLICATION

(11) **EP 1 241 809 A1**
(43) Date of publication of application: **18.09.2002**
(21) Application number: 02001696.0
(22) Date of filing: 24.01.2002
(51) Int. Cl.: H04B 10/18, G02B 6/34, G02B 6/16

(54) **Optical transmission system using dispersion compensating optical transmission line**

(30) Priority: 16.03.2001 JP 2001076818
(71) Applicant: KDDI Submarine Cable Systems Inc., Tokyo (JP)
(72) Inventor: Tanaka, Keiji, Kamifukuoka-shi, Saitama (JP); Morita, Itsuro, Kamifukuoka-shi, Saitama (JP); Edagawa, Noboru, Kamifukuoka-shi, Saitama (JP)
(74) Representative: Schaumburg, Thoenes & Thurn

(57) **Abstract**

An object of this invention is to realize 20 Gbit/s or more high speed WDM transmission over 6000 km. A dispersion compensating optical transmission line consists of a first optical fiber (20-1∼4) composed of an optical fiber whose chromatic dispersion becomes zero at a 1.3 µm band, a second optical fiber (22-1∼4) composed of an optical fiber whose chromatic dispersion becomes zero at a 1.3 µm band, and a dispersion/dispersion slope compensator (24-1∼4) which is substantially a linear optical device disposed between the first and second optical fibers to compensate for chromatic dispersion and dispersion slope of the first and second optical fibers.

## Description

### FIELD OF THE INVENTION

This invention relates to a dispersion compensating optical transmission line and optical transmission system, and more specifically to a dispersion compensating optical transmission line and optical transmission system capable of long haul transmission of wavelength division multiplexed (WDM) optical signals.

### BACKGROUND OF THE INVENTION

In an optical fiber transmission system using an optical amplifier, chromatic dispersion and nonlinear effect occurred in an optical fiber as well as ASE optical noise generated in an optical amplifier accumulate proportional to a transmission distance. Accordingly, design parameters to be required for an optical transmission system of 1000-km or less applied to the domestic transmission (hereinafter, expressed as a short distance transmission system) are very different from those for an optical transmission system of 6000-km or more (hereinafter, expressed as a long distance transmission system) applied to transoceanic transmission.

In a long distance optical fiber transmission system, it is necessary to suppress accumulated chromatic dispersion within a predetermined value, and in WDM optical transmission, it is further required to suppress nonlinear effects such as cross phase modification (XPM) between respective optical signals and four-wave mixing (FWM). At the beginning, a configuration to insert dispersion compensating fibers at appropriate intervals was proposed as a system to control the accumulated chromatic dispersion (See Japanese Laid-Open Patent Publication No. Heisei 6(1994)-11620, and its corresponding U.S. Pat. No. 5,361,319).

Moreover, in wavelength division multiplexing (WDM) optical transmission expected as a method to increase transmission capacity, it is necessary to compensate for chromatic dispersion difference (i.e. dispersion slope) between wavelengths in a transmission optical fiber. In the long distance transmission, the dispersion slopes must be compensated for on an optical transmission line. The allowable difference of dispersion values tends to decrease as a channel bit rate increases.

Accordingly, such an optical transmission system has been proposed in which each optical repeating span consists of a single mode optical fiber having a zero dispersion wavelength at a 1.3 µm band and a dispersion/dispersion slope compensating fiber to compensate for both chromatic dispersion and dispersion slope of the single mode optical fiber. See, for example, the U.S. Pat. No. 5,361,319, D. Le Guen et al., "Narrow Band 640 Gbit/s Soliton WDM transmission over 1200 km of Standard Fibre with 100 km 21 dB Amplifier Spans", ECOC '98, September 1998, Postdeadline papers, pp. 61-63, and T. Tanaka et al., "2.1-Tbit/s WDM Transmission over 7,221 km with 80-km repeater", ECOC 2000-PD1. 8, 2000.

In this specification, a single mode fiber having a zero dispersion wavelength at a 1.3µm band is simply called a single mode fiber, and a single mode fiber having a zero dispersion wavelength at a 1.5 µm band is called a dispersion shifted fiber.

At the present time, a 10 Gbit/s-based terabit transmission system for a transoceanic distance is designed and realized by combining WDM transmission techniques using a combination of a single mode fiber having an effective core area of 110 µm² and a dispersion/dispersion slope compensating fiber having an effective core area of 15-30 µm².

As a dispersion compensating transmission line to control the chromatic dispersion more locally, such a system combining dispersion/dispersion slope compensation of each repeating span and that of a wider area has been proposed (See EP 1035671 A2).

As a dispersion compensating system to equalize chromatic dispersion and reduce accumulated chromatic dispersion in an optical transmission line, a configuration to dispose a dispersion compensating fiber in the middle of one repeating span has been proposed as a 2000-km 16×40 WDM transmission system (See Itsuro Morita et al., "40 GBIT/S × 16 WDM TRANSMISSION OVER 2000 KM USING DISPERSION MANAGED LOW-NONLINEAR FIBER SPAN", ECOC 2000, 4, 25-27). In this system, however, a 20-km dispersion/dispersion slope compensating fiber of negative dispersion is disposed between 10-km positive dispersion fibers, and so it is difficult to realize satisfactory transmission characteristics in the long distance transmission of over 6000 km.

In a high speed long distance transmission system whose channel bit rate is 20 Gbit/s or more, a dispersion shifted fiber is regarded most suitable as a transmission fiber. This is because a chromatic dispersion value of a single mode fiber at a signal wavelength band (1.55 µm) is approximately as large as 20 ps/nm/km and therefore transmission characteristics are easily deteriorated because of the interaction of a pulse spread due to accumulated chromatic dispersion and a nonlinear effect, while a chromatic dispersion value of a dispersion shifted fiber at the signal wavelength band is as small as approximately from 5 ps/nm/km to -2 ps/nm/km and therefore the deterioration of transmission characteristics caused by the interaction of a pulse spread due to accumulated chromatic dispersion and a nonlinear effect is relatively small. See, for example, Japanese Laid-Open Patent Publication No. 2000-31902 and I. Morita et al., "40 Gbit/s single-channel soliton transmission over transoceanic distance by reducing Gordon-Haus timing jitter and soliton-soliton interaction", Journal of Lightwave Technologies, 1999, 17, pp. 2506.

However, since it is difficult to make an optical fiber having chromatic dispersion and dispersion slope reverse to those of a dispersion shifted fiber, a dispersion/dispersion slope compensating fiber which can be used in combination with a dispersion shifted fiber has not been commercially realized yet. Accordingly, in a practical system configuration, a dispersion compensator is used to demultiplex WDM optical signals into respective wavelengths, compensate dispersion and dispersion slope of each wavelength separately, and then multiplex the individual wavelengths again (See M. Suzuki et al., "20 Gbit/s-based soliton WDM transmission over Transoceanic distances using periodic compensation of dispersion and its slope", Electron. Lett., vol. 33, 1997, pp. 691-692, and H. Taga et al., "213 Gbit/s (20×10. 66 Gbit/s), over 9000 km Transmission Experiment using Dispersion Slope Compensator", OFC' 98 PD13).

As described above, it is difficult to further extend the transmission distance using the conventional systems. Also, it has been considered impossible to realize long WDM optical transmission as long as transoceanic and coast-to-coast distance even if those conventional optical fibers and optical components were combined together.

### SUMMARY OF THE INVENTION

It is therefore an object of the present invention to provide a dispersion compensating optical transmission line and optical transmission system capable of transmitting WDM optical signals at a bit rate of 20 Gbit/s or more over 6000 km long transmission.

A dispersion compensating optical transmission line according to the invention consists of a first optical fiber having an optical fiber whose chromatic dispersion becomes zero at a 1.3 µm band, a second optical fiber having an optical fiber whose chromatic dispersion becomes zero at a 1.3 µm band, and a dispersion/dispersion slope compensator which is substantially a linear optical device disposed between the first and second optical fibers to compensate chromatic dispersion and dispersion slope of the first and second optical fibers.

An dispersion compensating optical transmission line according to the present invention consists of a plurality of repeating spans and at least one dispersion compensator disposed at predetermined intervals to compensate for accumulated chromatic dispersion, wherein each of the plurality of repeating spans has a first and second optical fibers composed of optical fibers whose chromatic dispersion becomes zero at a 1.3 µm band and a dispersion/dispersion slope compensator which is substantially a linear optical device disposed between the first and second optical fibers to compensate for chromatic dispersion and dispersion slope of the first and second optical fibers.

An optical transmission system according to the present invention consists of an optical transmission line having a plurality of repeating spans, an optical transmitter to launch WDM optical signals onto the optical transmission line, and an optical receiver to receive the WDM optical signals from the optical transmission line, wherein each of the plurality of repeating spans has a first optical fiber composed of an optical fiber whose chromatic dispersion becomes zero at a 1.3 µm band, a second optical fiber composed of an optical fiber whose chromatic dispersion becomes zero at a 1.3 µm band, and a dispersion/dispersion slope compensator which is substantially a linear optical device disposed between the first and second optical fibers to compensate chromatic dispersion and dispersion slope of the first and second optical fibers.

Also, an optical transmission system according to the present invention consists of an optical transmission line having a plurality of repeating spans and at least one dispersion compensator disposed at predetermined intervals to compensate accumulated chromatic dispersion, an optical transmitter to launch WDM optical signals onto the optical transmission line, and an optical receiver to receive the WDM optical signals from the optical transmission line, wherein each of the plurality of repeating spans has a first and second optical fibers composed of optical fibers whose chromatic dispersion becomes zero at a 1.3 µm band, and a dispersion/dispersion slope compensator which is substantially linear optical device disposed between the first and second optical fibers to compensate for chromatic dispersion and dispersion slope of the first and second optical fiber.

Preferably, a single mode fiber having high chromatic dispersion and a large diameter is used as a main transmission optical fiber, and a dispersion/dispersion slope compensator which is substantially linear compensates the high chromatic dispersion and dispersion slope within a repeating span. Accordingly, stable and high speed long distance WDM transmission with an entirely high Q factor can be realized.

### BRIEF DESCRIPTION OF THE DRAWING

The above and other objects, features and advantages of the present invention will be apparent from the following detailed description of the preferred embodiments of the invention in conjunction with the accompanying drawings, in which:
FIG. 1 shows a schematic block diagram of an embodiment according to the invention;
FIG. 2 shows an example of dispersion map of the embodiment;
FIG. 3 shows an example of dispersion map in a local compensation span;
FIG. 4 shows measured results of transmission characteristic variations relative to locations of a dispersion compensator 24 in a local compensating span; and
FIG. 5 is a diagram showing improved effects of the embodiment compared to a configuration in the Morita paper.

### DESCRIPTION OF THE PREFERRED EMBODIMENT

Embodiments of the invention are explained below in detail with reference to the drawings.

Reference numeral 10 denotes an optical transmitter to launch 1.55 µm WDM optical signals onto an optical transmission line 12. Reference numeral 14 denotes an optical receiver to receive the WDM optical signals propagated on the optical transmission line 12. The WDM optical signals, for example, consists of optical signals having mutually different wavelengths λ1 to λn.

The optical transmission line 12 consists of a plurality of repeating spans 18 (18-1, 18-2, 18-3, 18-4...) divided by optical repeating amplifiers 16 (16-1, 16-2...). In this embodiment, accumulated chromatic dispersion and dispersion slope are locally compensated every repeating span and also widely compensated every predetermined numbers of repeating spans. A repeating span to locally compensate for the dispersion and dispersion slope is called a local compensating span. A repeating span to compensate for dispersion and dispersion slope not only locally but also widely is called a local and wide compensating span. The repeating spans 18-1, 18-2 and 18-3 are local compensating spans, and the repeating span 18-4 is a local and wide compensating span.

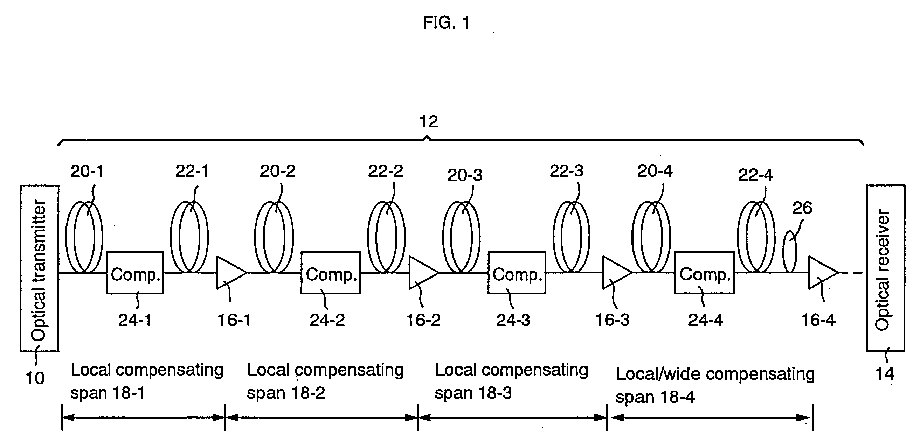

In a configuration shown in FIG. 1, each repeating span 18 locally compensates for dispersion and dispersion slope, and four repeating spans 18-1 through 18-4 compose a fundamental unit which widely compensates for the chromatic dispersion and dispersion slope. This process is repeated until reaching the optical receiver 14. A cycle of the wide area compensation is not limited to the four repeating spans but it can be either five repeating spans or more and three repeating spans or less. In practice, however, the cycle of five repeating spans or more is desirable.

Each of the repeating spans 18-1, 18-2, 18-3 and 18-4 consists of a positive dispersion single mode fiber 20 (20-1, 20-2, 20-3 and 20-4) having a large diameter with an effective core area of 100 µm² or more, a positive dispersion single mode fiber 22 (22-1, 22-2, 22-3 and 22-4) similarly having a large diameter with an effective core area of 100 µm² or more, and a dispersion compensator 24 (24-1, 24-2, 24-3 and 24-4) disposed between the fibers 20 and 22 to compensate for accumulated chromatic dispersion and dispersion slope of the fibers 20 and 22 so that the span averaged chromatic dispersion is equal to Dlocal.

The repeating span 18-4 further consists of a dispersion compensating fiber 26 disposed behind the single mode fiber 22-4 to compensate for the accumulated chromatic dispersion so that the equivalent dispersion is set to an average chromatic dispersion Davg at a wide area compensating cycle. The dispersion compensating fiber 26 is sometimes inserted within an optical amplifier at the back. It is possible to use a dispersion compensator having a configuration identical to that of the dispersion compensator 24 instead of the dispersion compensating fiber 26.

It is possible to employ single mode fibers having the same effective core area and dispersion characteristics as the fibers 20 and 22. Accordingly, in this embodiment, only two types of optical fibers are required, one is for the optical fibers 20 and 22 used as optical transmission fibers, and the other is for the dispersion compensating fiber 26. If a non-fiber optical element such as a dielectric multilayered film is used instead of the dispersion compensating fiber 26, only one type of optical fiber for optical transmission is required.

The dispersion compensator 24 consists of a linear optical element to compensate dispersion and dispersion slope and act linearly relative to power of input light. As one of such optical elements, there is all-pass filter using a dielectric multilayered film. When an all-pass filter is used, it is possible to set compensation amount of dispersion and dispersion slope in a wide range. Since the device 24 substantially does not have nonlinear effects, it is unnecessary to consider the nonlinear effects, namely influences of XPM and FWM, at the device 24. In a dielectric multilayered film, since an optical path length is extremely short compared to obtained dispersion compensation amount, interaction length between wavelength channels becomes very short even if accumulated chromatic dispersion between wavelengths is equal. This helps to improve transmission characteristics of each wavelength channel. As another example of the above optical elements, there are optical circuit elements such as a grating device.

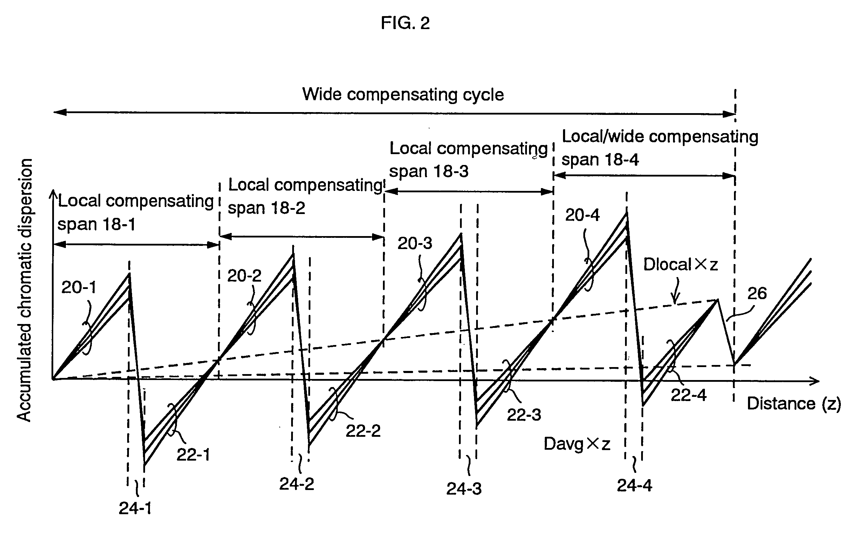

FIG. 2 shows a dispersion map of the embodiment. In the embodiment, the average chromatic dispersion per repeating span is controlled to Dlocal by the local dispersion compensation, and the average chromatic dispersion of whole optical transmission line 12 is controlled to Davg by the dispersion compensating fibers 26 disposed at the wide area compensating cycle. The Dlocal is preferably to have a large positive value to a certain extent, and the Davg is preferably to have a positive or negative value approximate to zero but other than zero. For example, the Dlocal should be set to +0.5 ps/nm/km, and the Davg should be set to +0.1 ps/nm/km.

As shown in FIG. 2, the accumulated chromatic dispersion of each wavelength equalizes in the dispersion compensator 24 which does not have nonlinear effects. Accordingly, factors to deteriorate transmission characteristics such as XPM and FWM are removed. Since a large dispersion compensating amount can be set in a short transmission distance, the interaction distance becomes shorter and resultingly the nonlinear effect can be neglected, even if nonlinear characteristics exist a little.

In the embodiment, the dispersion compensator 24 to realize a large dispersion compensating amount is used, and thus a single mode fiber having a large chromatic dispersion value can be used as a main optical transmission medium. In addition, because the single mode fiber having a large effective core area is used as a main transmission line as well as the dispersion compensator 24 which is substantially linear is used, the nonlinear effect at each repeating span 18 becomes extremely small. Although the dispersion compensating fiber 26 at the local and wide repeating span 18-4 has a small effective core area, the nonlinear effect occurred in the fiber is also small due to the small optical signal power. Therefore, in the embodiment, an optical transmission line having very small nonlinear light can be realized. Since the average optical signal power increases as a bit rate increases, to use a fiber having a large effective core area leads to reduce the optical power density, and resultingly the nonlinear effect can be reduced.

The optical transmitter 10 consists of an optical signal generator to generate WDM signals and a dispersion pre-compensating element to give a chromatic dispersion value having a sign reverse to that of Davg to the optical signals from the optical signal generator and send them onto the optical transmission line 12. The optical receiver 14 consists of a dispersion post-compensating element to compensate for the chromatic dispersion remained in the WDM optical signals from the optical transmission line 12 and an optical signal detector to detect individual optical signals from the WDM optical signals whose chromatic dispersion was compensated for by the dispersion post-compensating element. The dispersion post-compensating element can either compensate for the whole accumulated chromatic dispersion of the WDM optical signals at a time or compensate for the accumulated chromatic dispersion of each optical signal separately after demultiplexing the WDM optical signals into individual optical signals. Owing to the post-compensation of the dispersion, error amount differed from a designed value of the dispersion and dispersion slope in the optical transmission line 12 are absorbed.

By pre-compensating the dispersion in the optical transmitter 10, effects identical to phase modulation are obtained and thus it is either unnecessary to dispose a phase modulator in the optical transmitter 10 or possible to reduce a phase modulating degree even if a phase modulator is required. The maximum accumulated chromatic dispersion in the optical transmission line 12 is reduced by the pre-compensation of dispersion. This is especially effective in a long distance or ultra long distance optical transmission system such as a transoceanic system.

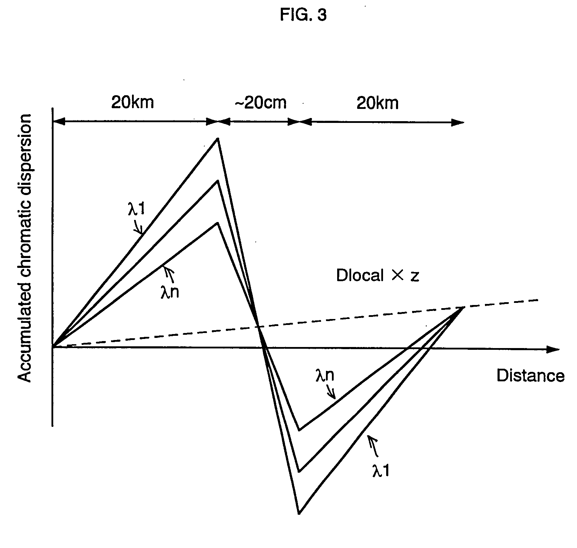

FIG. 3 shows an enlarged diagram of a dispersion map in the repeating span 18-1. The horizontal axis depicts distance and the vertical axis depicts accumulated chromatic dispersion. To make clearly understandable, the distance at the part of the dispersion compensator 24 is shown enlarged.

At an output of single mode fiber 22-4, the dispersion slope is ideally zero. The dispersion compensating fiber 26 compensates for accumulated chromatic dispersion of each wavelength channel into a value equal to average chromatic dispersion Davg. Ideally, the dispersion compensating fiber 26 gives a constant chromatic dispersion which does not depend on a wavelength to an optical signal of each wavelength. Practically, although the dispersion compensating fiber 26 has a little dispersion slope, the length in a practical system is as short as approximately from 1 to 3 km and accordingly accumulated chromatic dispersion differences between wavelengths by the dispersion compensating fiber 26 can be neglected. Needless to say, dispersion compensation without wavelength dependence can be realized using a dielectric multilayered film etc.

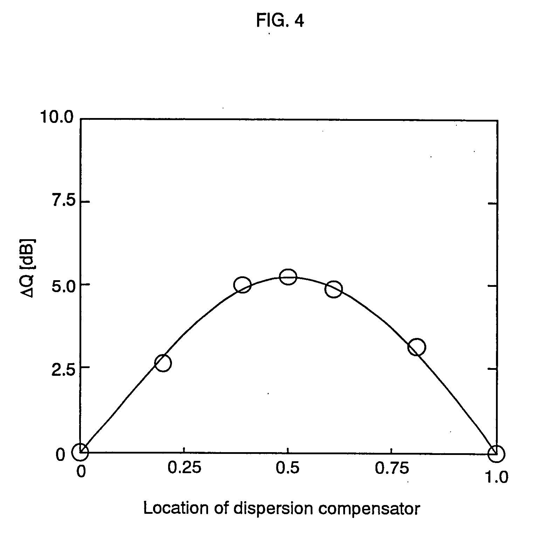

The preferable location of the dispersion compensator 24 in the local compensating span is investigated. FIG. 4 shows the results. The vertical axis depicts a relative value from a Q value when the dispersion compensator 24 is disposed at the end of the local compensating span. The horizontal axis depicts a value in which the location of the dispersion compensator 24 in the local compensating span is normalized by the distance of the local compensating span. For instance, 0 shows such a case in which a device corresponding to the dispersion compensator 24 is disposed on the optical signal input end of the repeating span, and 1 shows conversely such a case that the device is disposed on the optical signal output end of the repeating span. 0.5 shows that the dispersion compensator 24 is disposed in the middle of the local compensating span, and 0.75 shows that the dispersion compensator 24 is disposed at a point of three fourth of the local compensating span. As obviously shown in FIG. 4, the dispersion compensator 24 should be disposed near to the middle part. Furthermore, in an ultra long distance system such as a transpacific transmission system, this configuration have improved 5 dB compared to a case in which dispersion compensators are disposed both ends. This is such a large effect.

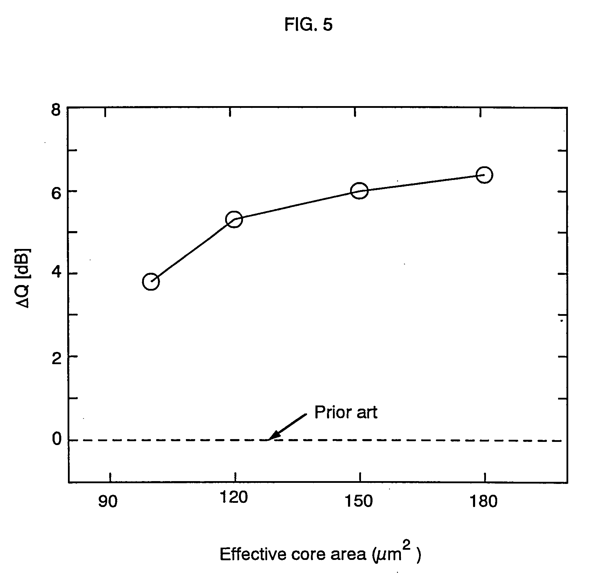

23 Gbit/s 50-wavelength optical signals are actually wavelength-multiplexed and performed numerical simulation of 6000 km transmission so as to study its transmission characteristics. The results are shown in FIG. 5. The transmission characteristics are then compared with those after 6000 km transmission in the configuration of the above-mentioned paper by Morita et al. In addition, influences of effective core areas of the single mode fibers 20 and 22 are studied at the same time. The vertical axis depicts difference of Q value, and the horizontal axis depicts the effective core areas of the single mode fibers 20 and 22. The repeating span is set to 40 km, and the dispersion/dispersion slope compensator 24 is inserted in the middle (at the 20 km point) of the repeating span to keep Dlocal +0.5 ps/nm/km. The wide area compensating cycle is composed of four repeating spans, and the dispersion compensating fiber 26 is inserted in an optical amplifier of the last optical repeating span to keep Davg to +0.1 ps/nm/km. The dispersion pre-compensating amount by the dispersion pre-compensating element in the optical transmitter 10 is set to -300 ps/nm. The single mode fibers 20 and 22 consist of optical fibers with chromatic dispersion value of +20 ps/nm/km and dispersion slope of +0.06 ps/nm/km. Compared to the result of the configuration in Morita et al., the transmission characteristics improved by 5 dB or more. When the effective core areas of the single mode fibers 20 and 22 are set to 120 µm² or more, the transmission characteristics improve even more.

In this embodiment, since a single mode fiber in which a larger diameter is easily obtained is used as an optical transmission fiber, the interaction between individual wavelengths in WDM signals can be shortened and the influence of XPM can be suppressed. If a dispersion/dispersion slope compensating fiber is used to compensate for large chromatic dispersion of the single mode fiber, nonlinear effect increases at the part where the dispersion/dispersion slope compensating fiber is used since its effective core area is as small as 15-30 µm². In this embodiment, since the dispersion compensator 24 that does not practically have the nonlinear effect is used, the nonlinear effect at the dispersion compensator 24 can be neglected. Consequently, an optical transmission line and optical transmission system to stably transmit a 20 Gbit/s or more high speed WDM signals over 6000 km can be realized.

In both local and wide area compensating spans, it is the ideal condition to keep the dispersion slope zero, and thus the dispersion slope is not necessarily to be zero. The differences of accumulated chromatic dispersion between wavelengths should be within the allowable amount of error of the whole optical transmission line 12.

Although the dispersion compensator 24 should preferably consist of a single optical element, it is also applicable even if it consists of a combined plurality of optical elements. In the latter case, the plurality of the optical elements are divided and disposed in each local compensation span.

Although such a case that the average chromatic dispersion value Davg in the whole transmission system and the average chromatic dispersion value Dlocal in each repeating span become both positive is explained above, this embodiment is applicable to either cases in which Davg and Dlocal become positive or negative.

As readily understandable from the aforementioned explanation, according to the invention, a transoceanic distance optical fiber transmission system in which a channel rate is 20 Gbit/s or more and total transmission capacity is 1 Tb/s or more can be realized.

While the invention has been described with reference to the specific embodiment, it will be apparent to those skilled in the art that various changes and modifications can be made to the specific embodiment without departing from the spirit and scope of the invention as defined in the claims.

## Claims

1. A dispersion compensating optical transmission line comprising:
a first optical fiber (20-1 ∼ 4) composed of an optical fiber whose chromatic dispersion becomes zero at a 1.3 µm band;
a second optical fiber (22-1∼4) composed of an optical fiber whose chromatic dispersion becomes zero at a 1.3 µm band; and
a dispersion/dispersion slope compensator (24-1∼4) which is substantially a linear optical device disposed between the first and second optical fibers to compensate for chromatic dispersion and dispersion slope of the first and second optical fibers.

2. The dispersion compensating optical transmission line of claim 1 wherein the first and second optical fibers (20-1∼4, 22-1∼4) comprise optical fibers having substantially the same configuration.

3. The dispersion compensating optical transmission line of claim 1 wherein the dispersion/dispersion slope compensator (24-1∼4) comprises an all-pass filter using a dielectric multilayered film.

4. A dispersion compensating optical transmission line comprising a plurality of repeating spans (18-1∼4) and at least one dispersion compensator (26) disposed at predetermined intervals to compensate for accumulated chromatic dispersion,
wherein each of the plurality of repeating spans (18-1∼4) comprises;
first and second optical fibers (20-1∼4, 22-1∼4) composed of optical fibers whose chromatic dispersion becomes zero at a 1.3 µm band; and
a dispersion/dispersion slope compensator (24-1∼4) which is substantially a linear optical device disposed between the first and second optical fibers to compensate for chromatic dispersion and dispersion slope of the first and second optical fibers.

5. The dispersion compensating transmission line of claim 4 wherein the first and second optical fibers (20-1∼4, 22-1∼4) comprise optical fibers having substantially the same configuration.

6. The dispersion compensating optical transmission line of claim 4 wherein the dispersion/dispersion slope compensator (24-1∼4) comprises an all-pass filter using a dielectric multilayered film.

7. An optical transmission system comprising:
an optical transmission line (12) having a plurality of repeating spans (18-1∼4), each repeating span having a first optical fiber composed of a first optical fiber (20-1∼4) whose chromatic dispersion becomes zero at a 1.3 µm band, a second optical fiber (22-1∼4) composed of an optical fiber whose chromatic dispersion becomes zero at a 1.3 µm band, and a dispersion/dispersion slope compensator (24-1∼4) which is substantially a linear optical device disposed between the first and second optical fibers to compensate for chromatic dispersion and dispersion slope of the first and second optical fibers;
an optical transmitter (10) to launch WDM optical signals onto the optical transmission line; and
an optical receiver (14) to receive the WDM optical signals from the optical transmission line.

8. The optical transmission system of claim 7 wherein the first and second optical fibers (20-1∼4, 22-1∼4) comprise optical fibers having substantially the same configuration.

9. The optical transmission system of claim 7 wherein the dispersion/dispersion slope compensator (24-1∼4) comprises an all-pass filter using a dielectric multilayered film.

10. An optical transmission system comprising:
an optical transmission line (12) having a plurality of repeating spans (18-1∼4) and at least one dispersion compensator (26) disposed at predetermined intervals to compensate for accumulated chromatic dispersion, each repeating span having first and second optical fibers (20-1∼4, 22-1∼4) composed of optical fibers whose chromatic dispersion becomes zero at a 1.3 µm band, and a dispersion/dispersion slope compensator (24-1∼4) which is substantially a linear optical device disposed between the first and second optical fibers (20-1∼4, 22-1∼4) to compensate for chromatic dispersion and dispersion slope of the first and second optical fiber;
an optical transmitter (10) to launch WDM optical signals onto the optical transmission line; and
an optical receiver (14) to receive the WDM optical signals from the optical transmission line.

11. The optical transmission system of claim 10 wherein the first and second optical fibers (20-1∼4, 22-1∼4) comprise optical fibers having substantially the same configuration.

12. The optical transmission system of claim 10 wherein the dispersion/dispersion slope compensator (24-1∼4) comprises an all-pass filter using a dielectric multilayered film.
